# EUROPÄISCHE PATENTSCHRIFT

(11) **EP 3 026 399 B1**
(45) Veröffentlichungstag und Bekanntmachung des Hinweises auf die Patenterteilung: **24.01.2018**
(21) Anmeldenummer: 15198675.9
(22) Anmeldetag: 13.02.2014
(51) Int. Cl.: G01D 5/34, G01D 5/347

(54) **VORRICHTUNG ZUR MESSUNG DES DREHWINKELS ZWEIER RELATIV ZUEINANDER ROTIERENDER OBJEKTE**
DEVICE FOR MEASURING THE ANGLE OF ROTATION OF TWO OBJECTS ROTATING RELATIVE TO EACH OTHER
DISPOSITIF DE MESURE DE L'ANGLE DE ROTATION DE DEUX OBJETS TOURNANT L'UN PAR RAPPORT A L'AUTRE

(43) Veröffentlichungstag der Anmeldung: 01.06.2016
(62) Teilanmeldung aus: 14155096.2
(73) Patentinhaber: SICK STEGMANN GmbH, 78166 Donaueschingen (DE); Fraunhofer-Gesellschaft zur Förderung der angewandten Forschung e.V., 80686 München (DE)
(72) Erfinder: Verwaal, Nanko, 91074 Herzogenaurach (DE); Neubauer, Harald, 91052 Erlangen (DE); Mutschler, Reinhold, 78056 Villingen-Schwenningen (DE); Junger, Stephan, 91088 Bubenreuth (DE); Hopp, David, 78166 Donaueschingen (DE)
(74) Vertreter: Ludewigt, Christoph

(56) Entgegenhaltungen:
- EP-A1- 2 600 113

## Beschreibung

Die Erfindung betrifft eine Vorrichtung zur Messung des Drehwinkels zweier relativ zueinander rotierender Objekte gemäß dem Oberbegriff des Patentanspruchs 1.

Für viele Anwendungen ist es von grundlegender Bedeutung, den Drehwinkel eines rotierenden Objektes zu messen. Im Allgemeinen wird dabei der Drehwinkel des rotierenden Objektes relativ zu einem feststehenden Objekt gemessen. Beispielsweise kann es sich bei dem rotierenden Objekt um die rotierende Welle eines Motors relativ zu einem feststehenden Maschinenteil handeln. Ein auf dem rotierenden Objekt vorgesehener Maßstab kann dabei sowohl inkrementell als auch absolut sein. Dabei ist es wünschenswert, eine möglichst toleranzunempfindliche Messung der relativen Drehbewegung durchführen zu können, welche jedoch eine hohe Genauigkeit aufweist. Im Idealfall erfolgt die Messung berührungslos, um mechanischen Verschleiß zu vermeiden.

Bekannt ist ein Messprinzip unter Ausnutzung der optischen Polarisation von Licht. Durch Drehung eines beleuchteten Polarisators, welcher sich beispielsweise mit dem rotierenden Objekt mit dreht, wird die Polarisation des Lichtes eines Lichtsenders beeinflusst, was mittels eines Empfängers detektierbar ist. Vor dem Empfänger ist ein vorgelagertes polarisierendes Element vorgesehen, wobei der Empfänger und das vorgelagerte polarisierende Element zusammen ein Analysatorelement bilden. Bei geeigneter Wahl der geometrischen Anordnung des Lichtsenders, des Polarisators und des aus dem Empfänger und dem vorgelagerten polarisierenden Element bestehenden Analysatorelements kann die relative Intensitätsmodulation im Analysatorelement ein Maß für den Drehwinkel sein. Bei Drehung des linear polarisierenden Polarisators gegen das vor dem Empfänger angeordnete linear polarisierende Element, das auch als Polarisationsfilter bezeichnet werden kann, ergibt sich eine sinusquadratförmige Intensitätsmodulation über eine Drehung um 360°. Um eine Drehwinkelberechnung vornehmen zu können, sind daher vorteilhafterweise zwei gegeneinander gedrehte Polarisationsfilter vorhanden.

Die EP 2 522 960 A1 offenbart eine Vorrichtung zur Messung des Drehwinkels zweier relativ zueinander rotierender Objekte, mit einem dem einen Objekt zugeordneten Sender, mit einem Linearpolarisator, wobei sich der Sender und der Polarisator in Abhängigkeit vom Drehwinkel relativ zueinander drehen, und mit einem Empfänger, der die durch das vorgelagerte polarisierende Element durchtretende Lichtintensität misst, um ein drehwinkelabhängiges Signal zu erzeugen. Dabei weist der Empfänger wenigstens zwei Empfangselemente auf, vor welchen jeweils ein Polarisationsfilter angeordnet ist, wobei wenigstens zwei der Polarisationsebenen der Polarisationsfilter gegeneinander verdreht angeordnet sind.

Insbesondere wenn der Empfänger als auf einem Siliziumchip integrierter Sensor, wie beispielsweise in der EP 2 275 790 A2 beschrieben, ausgebildet ist, sind die Empfangselemente unmittelbar benachbart und vergleichsweise klein ausgebildet, so dass es durch die von der Wellenlänge abhängige Eindringtiefe des Lichtes in das Silizium im Grenzgebiet der benachbarten Empfangselemente zu einem Übersprechen der Empfangssignale der benachbarten Empfangselemente kommen kann. Dieses Übersprechen führt zu einer gegenseitigen Beeinflussung von Amplitude und Phase der detektierten Signale und damit in der Vorrichtung zur Messung des Drehwinkels zweier relativ zueinander rotierender Objekte zu einem Messfehler in der Winkelmessung.

Aus EP 2 600 113 A1 ist eine Vorrichtung gemäß dem Oberbegriff des Patentanspruchs 1 bekannt, wobei auf dem Empfänger wenigstens zwei gleichartige Gruppen mit jeweils wenigstens zwei Empfangselementen vorgesehen sind. Hierbei sind die Gruppen redundant vorgesehen und werden in einem Überwachungsmodus unabhängig voneinander ausgewertet. Die Empfangselemente der Gruppen sind um 180°/n gegeneinander verdreht, wobei n die Anzahl der Empfangselemente in der Gruppe darstellt.

Die Aufgabe der Erfindung besteht darin, eine Vorrichtung zur Messung des Drehwinkels zweier relativ zueinander rotierender Objekte derart weiterzubilden, dass in dem Empfänger Messfehler, insbesondere Messfehler durch Übersprechen zwischen verschiedenen Empfangselementen, bei der Winkelmessung verringert, insbesondere vermieden, werden.

Die Aufgabe der Erfindung wird gelöst durch eine Vorrichtung zur Messung des Drehwinkels zweier relativ zueinander rotierender Objekte mit den Merkmalen des Anspruchs 1.

Hierbei umfasst die erfindungsgemäße Vorrichtung einen einem ersten Objekt zugeordneten Sender, einen einem zweiten Objekt zugeordneten, die Polarisationseigenschaft eines Sendelichts beeinflussenden Polarisator, wobei sich der Sender und der Polarisator in Abhängigkeit vom Drehwinkel relativ zueinander drehen, und einen dem ersten Objekt zugeordneten Empfänger, der die durch den Polarisator modulierte Polarisationseigenschaft des Sendelichts analysiert, um ein drehwinkelabhängiges Signal zu erzeugen, wobei der Empfänger zumindest ein zweidimensionales, aus Zeilen bestehendes Array aufweist, auf dem Empfangselemente mit jeweils vorgeordneten Polarisationsfilterelementen einer Polarisationsfilterstruktur angeordnet sind, so dass die Empfangselemente mit jeweils vorgeordneten Polarisationsfilterelementen der Polarisationsfilterstruktur jeweilige Analysatorelemente bilden, wobei die Analysatorelemente mit jeweils gegeneinander verdrehten Polarisationsebenen derart angeordnet sind, dass mindestens zwei Gruppen von Analysatorelementen mit jeweils definiertem Winkelversatz der Polarisationsebenen sich ergeben, und wobei die Gruppen in definierter Anordnung zu einander in den Zeilen des Arrays derart vorgesehen sind, dass Analysatorelemente mit gleichen Polarisationsebenen durch zumindest ein Analysatorelement mit einer anderen Polarisationsebene voneinander beabstandet sind, und das Array des Empfängers wenigstens zwei Zeilen mit jeweils mehreren Analysatorelementen aufweist, wobei angrenzende Zeilen jeweils um eine halbe Länge eines Abstandes zwischen den Zentren zweier benachbarten Analysatorelementen gegeneinander in Längsrichtung der Zeile versetzt angeordnet sind.

Dies bedeutet, dass zwei Analysatorelemente mit der gleichen Polarisationsebene von z.B. 0° nicht unmittelbar nebeneinander, insbesondere in Kontakt miteinander, angeordnet sein dürfen, sondern mindestens ein Analysatorelement mit einer anderen Polarisationsebene von z.B. 90° zwischen den beiden Analysatorelementen mit der gleichen Polarisationsebene von 0° angeordnet sein muss.

Gemäß einem bevorzugten Ausführungsbeispiel bestehen die Gruppen von Analysatorelementen jeweils aus einem Paar von Analysatorelementen, wobei die Analysatorelemente eines Paares einen Winkelversatz der Polarisationsebenen von 90° zueinander aufweisen.

Gemäß einem weiteren bevorzugten Ausführungsbeispiel bestehen die Gruppen von Analysatorelementen aus Paarungen von 0° und 90°, 22,5° und 112,5°, 45° und 135°, und 67,5° und 157,5° oder 0° und 90°, 11,25° und 101,25°, 22,5° und 112,5°, 33,75° und 123,75°, 67,5° und 157,5°, und 78,75° und 168,75°.

Gemäß einem weiteren bevorzugten Ausführungsbeispiel ist in jeder Zeile des Arrays nur eine Gruppe von Analysatorelementen aus gleicher Paarung angeordnet, wobei benachbarte Analysatorelemente unterschiedliche Polarisationsebenen aufweisen.

Bevorzugter Weise entspricht der Abstand zwischen den Zentren zweier benachbarten Analysatorelementen bzw. zweier benachbarten Empfangselementen der größten Ausdehnung des Analysatorelements bzw. des Empfangselements parallel zur Längsrichtung der Zeile.

Dadurch, dass eine Zeile jeweils um eine halbe Länge eines Abstandes zwischen den Zentren zweier benachbarten Analysatorelementen gegenüber der anderen Zeile in Längsrichtung der Zeile versetzt angeordnet ist, grenzen von einer Zeile jeweils zwei Analysatorelemente an ein in der daneben liegenden Zeile angeordnetes Analysatorelement an. Die Analysatorelemente, von welchen auf ein bestimmtes Analysatorelement ein Übersprechen erfolgen kann, werden dadurch gegenseitig kompensiert, was zu einer Signaloptimierung und Minimierung der Messfehler bei der Messung des Drehwinkels führt.

Eine Ausführungsform der Erfindung sieht vor, dass in einer Zeile zwei Gruppen von Analysatorelementen angeordnet sind, deren Polarisationsebenen um 90° gegeneinander verdreht sind, wobei benachbarte Analysatorelemente unterschiedliche Polarisationsebenen aufweisen. Analysatorelementen mit Polarisationsebenen, welche einen Winkelversatz von 90° aufweisen, können sich gegenseitig in ihrem Übersprechverhalten kompensieren. Dadurch wird lediglich die Amplitude jedoch nicht die Phase der Signale des eigentlichen Analysatorelements beeinflusst, sofern das Analysatorelement in seinem linearen Bereich arbeitet. Dadurch, dass in einer Zeile genau zwei Typen von Analysatorelementen angeordnet sind, deren Polarisationsebenen um 90° gegeneinander verdreht sind, wobei benachbarte Analysatorelemente unterschiedliche Polarisationsebenen aufweisen, führt das Übersprechen nicht zu einem Phasenfehler. Eine derartige Zeile mit Analysatorelementen bzw. Empfangselementen ist daher in sich invariant gegenüber Übersprechen. Aufgrund der versetzten Anordnung tritt ein Übersprechen auf ein Analysatorelement bzw. Empfangselement einer benachbarten Zeile immer sowohl durch ein Analysatorelement bzw. Empfangselement des einen Typs und ein Analysatorelement bzw. Empfangselement des anderen Typs auf, wobei sich diese Einflüsse aufgrund der um 90° gegeneinander verdrehten Polarisationsebenen in ihrem Einfluss auf die Phase gegenseitig aufheben. Eine derartige Anordnung ermöglicht somit in besonders effektiver Weise eine Verringerung beziehungsweise ein Vermeiden eines Einflusses eines Übersprechens auf das Messsignal.

Vorteilhafterweise sind die die Gruppen von Analysatorelementen in wenigstens zwei, vorzugsweise vier oder acht, angrenzenden Zeilen voneinander verschieden.

Eine bevorzugte Ausführungsform der Erfindung sieht vor, dass das Array des Empfängers wenigstens drei Zeilen aufweist, wobei wenigstens ein Analysatorelement sechs benachbarte Analysatorelemente aufweist, wobei die sechs benachbarten Analysatorelemente in zwei Gruppen mit jeweils drei Analysatorelementen zuordenbar sind, wobei umlaufend um das eine Analysatorelement jeweils abwechselnd Analysatorelemente der unterschiedlichen Gruppen angeordnet sind, und wobei jede der Dreiergruppe von Analysatorelementen jeweils Winkelversätze von 60° und einen Winkelversatz von 120° aufweist. Durch diese Ausgestaltung und Anordnung der benachbarten Analysatorelemente wird ermöglicht, dass der Signalbeitrag jeder Gruppe zu dem umschlossenen Analysatorelement aufgrund der gewählten Symmetrie konstant ist, sodass die Phase der Signale nicht durch das Übersprechen beeinflusst wird, sondern sich lediglich ein Gleichlichtanteil und somit ein Offset ergibt, der für alle Signale gleich ist. Hierbei gehört das umschlossene Analysatorelement zu einer weiteren Gruppe von Analysatorelementen mit jeweils drei Analysatorelementen und zwei verschiedenen Winkelversätzen. In diesem Zusammenhang ist zu erwähnen, dass die erwähnten zwei Winkelversätze dadurch zustande kommen, weil lineare Polarisatoren symmetrisch und damit für die Winkel 0° und 180° identisch sind, d.h. 0° entspricht für den linearen Polarisator 180°. Somit ergeben sich signaltechnisch gesehen drei Signale, die jeweils um 120° zueinander versetzt sind. In Polarisationsebenen betrachtet, bedeutet dies für die Polarisationsebenen, dass sie jeweils um 60° zueinander versetzt sind.

Beispielsweise können in einer der drei Gruppen die Polarisationsebenen der drei Analysatorelemente 0°, 60° und 120° oder 40°, 100° und 160° oder 20°, 80° und 140° betragen.

Vorteilhafterweise sind bei allen Analysatorelementen mit sechs benachbarten Analysatorelementen die sechs benachbarten Analysatorelemente in zwei Gruppen mit jeweils drei Analysatorelementen angeordnet, wobei umlaufend um das eine Analysatorelement jeweils abwechselnd Analysatorelemente der unterschiedlichen Gruppen angeordnet sind und wobei in beiden Gruppen die Polarisationsebenen von zwei Paaren der drei Analysatorelemente um 60° und einem Paar der drei Analysatorelemente um 120° verdreht sind. Dadurch wird eine großflächige Anordnung ermöglicht, in welcher der Einfluss des Übersprechens verringert beziehungsweise ganz vermieden wird. Somit kann auf diese Weise eine regelmäßig fortsetzbare Struktur mit drei, sechs oder neun verschiedenen Polarisationsrichtungen gebildet werden.

Grundsätzlich ist es möglich, dass die drei Gruppen den gleichen Satz von Polarisationsrichtungen aufweisen. In einer bevorzugten Ausführungsform weisen jedoch die sechs benachbarten Analysatorelemente sechs verschiedene Polarisationsebenen und somit die beiden Dreiergruppen zwei verschiedene Sätze von Polarisationsrichtungen auf. Beispielsweise kann eine Gruppe die Polarisationsebenen mit Polarisationsrichtungen 0°, 60° und 120° aufweisen, während die beiden anderen Gruppen Polarisationsebenen mit Polarisationsrichtungen von 40°, 100° und 160° bzw. 20°, 80° und 140° aufweisen können.

Eine bevorzugte Ausführungsform der Erfindung sieht vor, dass die Analysatorelemente rechteckig, vorzugsweise mit einer Länge, welche doppelt so groß ausgebildet ist wie eine Breite, oder sechseckig ausgebildet sind. Mit derartigen Analysatorelementen ist eine lückenlose, insbesondere auf Stoß angeordnete Anordnung der Analysatorelemente einfach realisierbar. Selbstverständlich sind aber auch dreieckige, fünfeckige oder sonstige Geometrien für die Analysatorelemente denkbar.

Besonders bevorzugt ist der Empfänger als integrierter Sensor ausgebildet, bei welchem insbesondere ein optoelektronischer Sensor und eine Polarisationsfilterstruktur gemeinsam auf einem Halbleitersubstrat angeordnet sind. Insbesondere bei derartigen Empfängern ist eine Verringerung oder vollständige Vermeidung des Einflusses eines Übersprechens wünschenswert.

Eine besonders bevorzugte Ausführungsform der Erfindung sieht vor, dass zur Bestimmung des drehwinkelabhängigen Signals lediglich die Signale der Analysatorelemente herangezogen werden, welche vollständig von weiteren Analysatorelementen umgeben sind. Da bei Analysatorelementen am Rand aufgrund der unsymmetrischen Anordnung von benachbarten Analysatorelementen nicht ausgeschlossen werden kann, dass ein Übersprechen erfolgt, und eine optimierte Verringerung des Einflusses des Übersprechens lediglich bei den innenliegenden Analysatorelementen erreicht wird, kann die Auswertung weiter verbessert und der Messfehler weiter verringert werden, wenn lediglich die Analysatorelemente ausgewertet werden, welche vollständig von weiteren Analysatorelementen umgeben sind. Die am Rand angeordneten Analysatorelemente erzeugen das erforderliche Übersprechen auf die innen angrenzenden Analysatorelemente, um die Symmetrie für die ausgewerteten Analysatorelemente zu wahren, werden vorteilhafterweise jedoch nicht selber ausgewertet, da bei ihnen der Einfluss des Übersprechens in der Regel nicht in optimaler Weise verringert ist.

Vorteilhafte Ausgestaltungen und Weiterbildungen sowie weitere Vorteile der Erfindung sind den Unteransprüchen, der nachfolgenden Beschreibung und den Zeichnungen zu entnehmen. Im Folgenden wird die Erfindung anhand von Ausführungsbeispielen unter Bezugnahme auf die Zeichnungen im Einzelnen erläutert. In den Zeichnungen zeigen:
- Fig. 1: eine schematische Darstellung einer Vorrichtung zur Messung des Drehwinkels zweier relativ zueinander rotierender Objekte,
- Fig. 2: eine schematische Darstellung eines Beispiels des Empfängers mit Polarisationsfilterstruktur der Vorrichtung gemäß Figur 1, die nicht Teil der Erfindung ist,
- Fig. 3: eine schematische Darstellung eines weiteren Ausführungsbeispiels des Empfängers mit Polarisationsfilterstruktur der Vorrichtung gemäß Figur 1,
- Fig. 4: eine schematische Darstellung eines weiteren Ausführungsbeispiels des Empfängers mit Polarisationsfilterstruktur der Vorrichtung gemäß Figur 1 und
- Fig. 5: eine schematische Darstellung eines weiteren Ausführungsbeispiels des Empfängers mit Polarisationsfilterstruktur gemäß Figur 1.

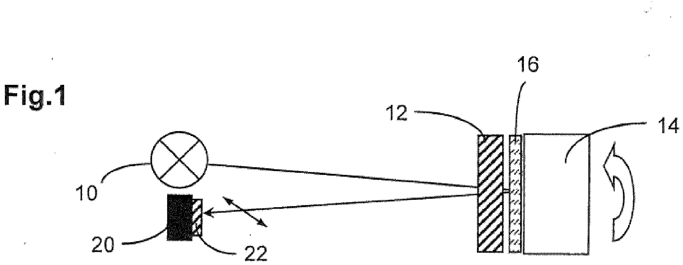

Figur 1 zeigt eine Vorrichtung zur Messung des Drehwinkels zweier relativ zueinander rotierender Objekte. Dabei ist vorliegend lediglich ein Objekt rotierend ausgebildet, nämlich eine Welle 14 beispielsweise eines Motors, wobei der Drehwinkel der Welle 14 in Bezug zu einem feststehenden Teil, beispielsweise dem Motorgehäuse oder einem feststehenden Maschinenteil, ermittelt werden soll. Die Vorrichtung weist eine Lichtquelle 10 auf, welche feststehend angeordnet ist und beispielsweise dem feststehenden Teil zugeordnet sein kann. Die Lichtquelle 10 kann beispielsweise unpolarisiertes oder teilpolarisiertes Licht aussenden und insbesondere als LED ausgebildet sein.

Der rotierenden Welle 14 ist ein sich mit der Welle 14 drehender Reflektor 16 zugeordnet, vor welchem ein ebenfalls mit der Welle 14 drehender Polarisator 12, welcher beispielsweise als Polarisationsfilter ausgebildet ist, angeordnet ist. Hierbei kann alternativ der Polarisator 12 als "Wire Grid" Polarisator oder als plasmonischer Polarisator ausgebildet sein, so dass er polarisiertes Licht reflektieren kann. Der Reflektor 16 kann ferner entweder als diffus reflektierendes oder absorbierendes Element ausgebildet sein, um die beim ersten Durchtritt des Lichtes durch den Polarisator 12 erhaltene Polarisation zu zerstören.

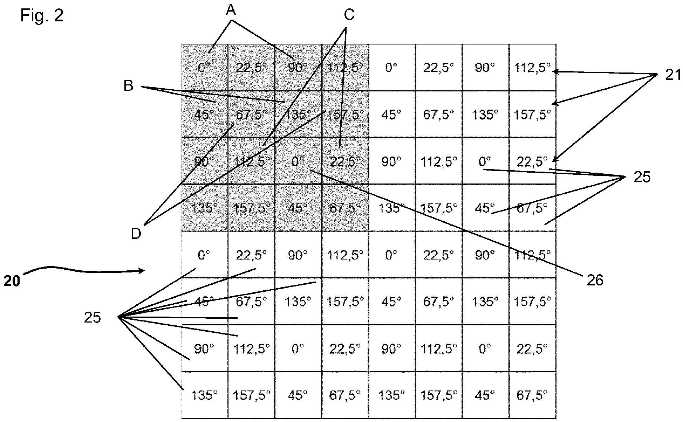

Weiterhin ist ein Empfänger 20 vorgesehen, vor welchem eine Polarisationsfilterstruktur 22 angeordnet ist. Der Empfänger 20 weist zumindest ein zweidimensionales, aus Zeilen 21, 21', 21", 21''' bestehendes Array auf, auf dem Empfangselemente mit jeweils vorgeordneten Polarisationsfilterelementen der Polarisationsfilterstruktur 22 angeordnet sind. Die Empfangselemente mit den jeweils vorgeordneten Polarisationsfilterelementen bilden jeweilige Analysatorelemente 25, 25', 25", 25"', 26 zum Detektieren der Winkelsignale. Der Empfänger 20 ist ebenfalls feststehend angeordnet und kann beispielsweise dem feststehenden Teil zugeordnet sein. Verschiedene Ausführungsformen des Empfängers 20 mit der Polarisationsfilterstruktur 22 bzw. der Anordnung der Analysatorelementen 25, 25', 25", 25"', 26 werden anhand der Figuren 2 bis 5 erläutert, wobei das Ausführungsbeispiel in der Figur 2 keinen Teil der Erfindung darstellt.

Abhängig vom Drehwinkel der rotierenden Welle 14 ändert sich die Intensität des Lichtes, welches in den Analysatorelementen 25, 25', 25", 25"', 26 detektiert wird.

Figur 2 zeigt in schematischer Darstellung ein Ausführungsbeispiel eines Empfängers 20 mit einer Anordnung der Analysatorelemente 25, die nicht unter dem Schutzumfang des Anspruchs 1 fällt. Der Empfänger 20 weist ein zweidimensionales, aus mehreren Zeilen 21 bestehendes Array auf, auf dem eine Mehrzahl von Analysatorelementen 25 angeordnet sind.

Die Analysatorelemente 25 weisen unterschiedliche Polarisationsrichtungen bzw. -winkel auf, die 0°, 22,5°, 45°, 67,5°, 90°, 112,5°, 135° und 157,5° betragen. Hierbei sind die Analysatorelemente 25 derart auf dem Array angeordnet, dass sie in vier Gruppen A, B, C, D von Analysatorelementen 25 zugeordnet werden können, die jeweils aus einem Paar von Analysatorelementen 25 bestehen.

Die Paare von Analysatorelementen 25 zeichnen sich durch einen Winkelversatz von 90° zueinander aus, so dass sich bei der Anordnung vier Paarungen von Analysatorelementen mit den Polarisationsrichtungen 0° und 90°, 22,5° und 112,5°, 45° und 135°, und 67,5° und 157,5° ergeben.

Die Gruppen A, B, C, D von Analysatorelementen 25 sind in einer definierten Anordnung zueinander in den Zeilen des Arrays vorgesehen, so dass ein innenliegendes Analysatorelement 26 durch drei Gruppen B, C, D von Analysatorelementen 25 sowohl in horizontaler Richtung als auch in vertikaler Richtung des Arrays umgeben ist.

Durch diese Anordnung wird ein Übersprechen der einzelnen Analysatorelemente 25 innerhalb der Gruppe B, C, D kompensiert, so dass ein Einfluss des Übersprechens auf das zentral innenliegende Analysatorelement 26 reduzier- bzw. vermeidbar ist. Ferner ist mittels dieser Anordnung eine Kompensation des Übersprechens für acht Polarisationsrichtungen realisierbar.

Ferner sind die jeweiligen Analysatorelemente 25 mit gleicher Polarisationsebene, wie z.B. 0°, derart in den Zeilen des Arrays angeordnet, dass sie nicht unmittelbar nebeneinander, insbesondere in direktem Kontakt zueinander, angeordnet sind, sondern durch drei Analysatorelemente mit einer anderen Polarisationsebene in waagerechter, nämlich 22,5°, 90° und 112,5°, und senkrechter, nämlich 45°, 90° und 135°, Richtung und durch ein Analysatorelement mit der Polarisationsebene 67,5° in diagonaler Richtung beabstandet.

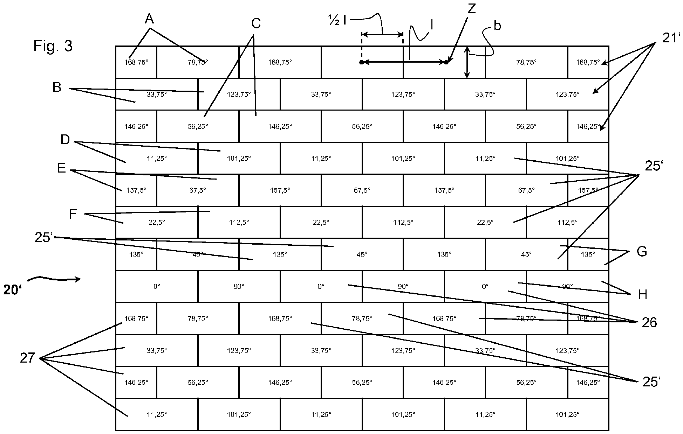

In der Figur 3 ist in schematischer Darstellung ein erstes Ausführungsbeispiel einer erfindungsgemäßen Anordnung eines Empfängers 20' mit einer Polarisationsfilterstruktur gezeigt. Hierbei weist der Empfänger 20' ebenfalls mehrere Zeilen 21' auf, in welchen jeweils mehrere Analysatorelemente 25' angeordnet sind.

Abgesehen von einigen am Rand angeordneten Analysatorelementen 27 weisen die Analysatorelemente 25' bevorzugterweise eine Länge I und eine Breite b auf, wobei die Länge I, welche in Längsrichtung der Zeile 21' angeordnet ist, einen Abstand zwischen zwei Zentren Z von benachbart angeordneten Analysatorelementen 25' wiedergibt und insbesondere vorteilhafterweise doppelt so groß ist wie die Breite b der Analysatorelemente 25'.

Beispielsweise weist der Empfänger 20' zwölf Zeilen 21' auf, wobei in jeder Zeile sechs oder sieben Analysatorelemente 25' angeordnet sind. Die Analysatorelemente 25' sind derart angeordnet, dass angrenzende Zeilen 21' jeweils um eine halbe Länge I des Analysatorelementes 25' gegeneinander in Längsrichtung der Zeile 21' versetzt angeordnet sind. Dadurch ergibt sich eine Art Backsteinanordnung. Vor jedem der Analysatorelemente 25' ist ein Polarisationsfilter angeordnet. Die in den Analysatorelementen 25' in Figur 3 angegebene Gradzahl stellt die Verdrehung der Polarisationsebene des vor dem entsprechenden Analysatorelement 25' angeordneten Polarisationsfilters gegenüber einem Winkel von 0° dar.

In jeder der Zeilen 21' ist genau eine Gruppe aus zwei Analysatorelementen 25' angeordnet, wobei sich die beiden Analysatorelemente 25' dadurch unterscheiden, dass ihre Polarisationsebenen um 90° gegeneinander verdreht sind. In jeder der Zeilen 21' sind die beiden Analysatorelemente 25' abwechselnd angeordnet. In einer Zeile 21' benachbarte Analysatorelemente 25' unterscheiden sich somit immer in ihrer Polarisationsrichtung um 90°. Da die mit diesen Analysatorelementen 25' detektierten Signalverläufe genau gegenphasig sind, führt ein Übersprechen lediglich zu einem Einfluss auf die Amplitude, nicht jedoch zu einem Einfluss auf die Phase des Signals. Jede der Zeilen 21' ist somit in sich invariant hinsichtlich der Phase gegenüber Übersprechen.

Aufgrund der Backsteinanordnung tragen jedoch in einer Zeile 21' benachbarte Analysatorelemente 25' jeweils zu gleichen Teilen zum Übersprechen auf ein Analysatorelement 25' in einer benachbarten Zeile 21' bei, sodass sich die Übersprechbeiträge in dem benachbarten Analysatorelement 25' ebenfalls kompensieren.

Ferner sind durch die abwechselnde Anordnung die Analysatorelemente 25' mit gleichen Polarisationsebenen in waagerechter Richtung des Arrays immer durch genau ein Analysatorelement 25' mit einer anderen Polarisationsebene voneinander beabstandet.

Betrachtet man beispielsweise ein innenliegendes Analysatorelement 26, dessen Polarisationsebene im Winkel von 0° angeordnet ist, welches sich im vorliegenden Beispiel insbesondere in der achten Zeile an dritter Stelle von links befindet, erfährt dieses Analysatorelement 26 beispielsweise Übersprechbeiträge von den beiden in der darüber liegenden Zeile 21' angeordneten Analysatorelementen 25' mit den Phasenlagen der Polarisationsfilter von 135° und 45°, welche jedoch um 90° zueinander gedreht sind, somit genau gegenphasig sind und sich daher in dem Analysatorelement 26 kompensieren. Weiterhin erfährt das Analysatorelement 26 Übersprechbeiträge von den beiden in der darunter liegenden Zeile 21' angeordneten Analysatorelementen 25' mit den Winkellagen der Polarisationsfilter von 168,75° und 78,75°, welche ebenfalls genau um 90° zueinander gedreht sind, so dass deren Signalbeiträge ebenfalls gegenphasig sind und sich daher in dem Analysatorelement 26 kompensieren.

Es ist möglich, in jeder der Zeilen 21' gleiche Typen von Analysatorelementen 25' vorzusehen. In dem in Figur 3 dargestellten Ausführungsbeispiel werden jedoch acht verschiedene Gruppen A bis H von Analysatorelementen 25' verwendet, nämlich die Gruppen 0° und 90°, 45° und 135°, 22,5° und 112,5°, 157,5° und 67,5°, 11,25° und 101,25°, 146,25° und 56,25°, 123,75° und 33,75° sowie 78,75° und 168,75°. Diese Gruppen können in beliebiger Reihenfolge in beliebig vielen Zeilen angeordnet werden.

Bei einer Auswertung der in dem Empfänger 20' detektierten Signale können sämtliche Analysatorelemente 25' berücksichtigt werden. Vorteilhafterweise werden lediglich die innenliegenden Analysatorelemente 26, welche vollständig von Analysatorelementen 25' umgeben sind, ausgewertet, die außenliegenden Analysatorelemente 27 bei der Auswertung jedoch unberücksichtigt belassen, da in diesen gegebenenfalls die Übersprechbeiträge nicht optimal kompensiert sind.

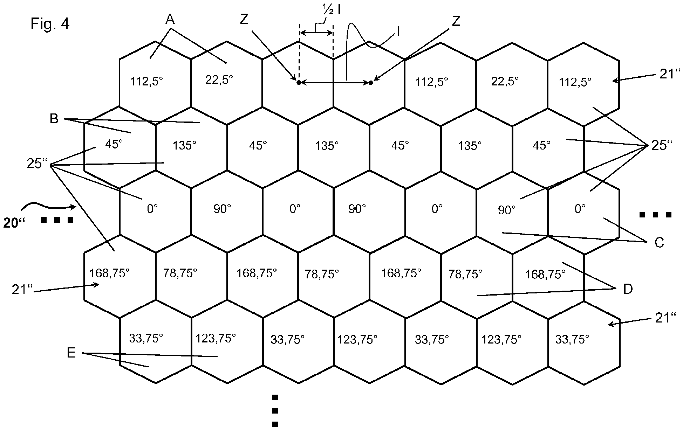

Figur 4 zeigt ein weiteres Ausführungsbeispiel eines Empfängers 20" mit einer erfindungsgemäßen Anordnung der Analysatorelemente 25". Der Empfänger 20" weist mehrere Analysatorelemente 25" auf, welche in mehreren Zeilen 21" angeordnet sind. Die in Figur 4 in den Analysatorelementen 25" angegebenen Winkelangaben entsprechen wiederum der Drehung der Polarisationsebene des entsprechenden Analysatorelementes 25" gegenüber der Ausrichtung von 0°.

Die in Figur 4 dargestellte Anordnung unterscheidet sich von der in Figur 3 dargestellten Anordnung im Wesentlichen dadurch, dass die Analysatorelemente 25" nicht rechteckig, sondern als Sechseck ausgebildet sind. Die an den Seiten der Anordnung angedeuteten Punkte bedeuten, dass die Anordnung in alle vier Richtungen beliebig mit weiteren Zeilen 21" und weiteren Analysatorelementen 25" fortgesetzt werden kann. Die sechseckige Geometrie kann dabei sowohl regelmäßige Sechsecke als auch unregelmäßige Sechsecke umfassen.

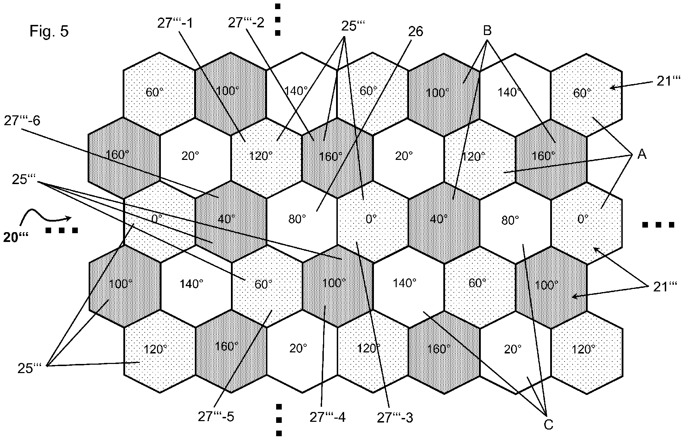

In der Figur 5 ist eine schematische Darstellung eines weiteren Ausführungsbeispiels eines Empfängers 20'" mit einer erfindungsgemäßen Anordnung der Analysatorelemente 25"' gezeigt. Der Empfänger 20'" weist mehrere Analysatorelemente 25'" auf, welche in Zeilen 21"' angeordnet sind. Die in jedem der Analysatorelemente 25'" angegebene Winkelangabe bezieht sich wiederum auf die Verdrehung der Polarisationsebene des entsprechenden Polarisationsfilters gegenüber der Richtung von 0°. Bei dieser Anordnung der Analysatorelemente 25'" sind die vom Rand des Empfängers 20'" beabstandeten Analysatorelemente 25'" von sechs Analysatorelementen 25'" umgeben, deren Polarisationsrichtungen wie folgt angeordnet sind.

Beispielsweise wird dazu das Analysatorelement 26 in der dritten Zeile 21"' an der dritten Position von links betrachtet, welches beispielsweise eine Richtung der Polarisationsebene von 80° aufweist. Das Analysatorelement 26 ist von sechs Analysatorelementen 27"'-i umgeben. Die Analysatorelemente 27"'-i bilden zwei Gruppen A, B, nämlich eine Gruppe A mit den Analysatorelementen 27"'-1, 27"'-3 und 27"'-5 sowie eine zweite Gruppe B mit den Analysatorelementen 27"'-2, 27"'-4 und 27"'-6. In jeder der beiden Gruppen A, B sind die Polarisationsebenen von zwei Paaren der drei Analysatorelemente 27"'-3 und 27"'-5, 27"'-5 und 27"'-1; 27"'-2 und 27"'-4, 27"'-4 und 27"'-6 um 60° und einem Paar der drei Analysatorelemente 27"'-1 und 27"'-3; 27"'-2 und 27"'-6 um 120° verdreht. Die Polarisationsrichtungen der Empfangselemente 27"'-i können in beiden Gruppen A, B gleich ausgebildet sein. Vorliegend sind jedoch in der ersten Gruppe A die Polarisationsebenen 0°, 60° und 120° angeordnet, während in der zweiten Gruppe B die Polarisationsrichtungen 40°, 100° und 160° angeordnet sind. Hierbei bildet das innenliegende Analysatorelement 26 mit zwei weiteren Analysatorelementen 25'" eine dritte Gruppe C, die die Polarisationsrichtungen 20°, 80° und 140° aufweisen. Die drei Gruppen A, B, C bilden zusammen den erfindungsgemäßen Empfänger 20"'.

Umlaufend um das innenliegende Analysatorelement 26 sind abwechselnd Analysatorelemente 27"'-1, 27"'-2, 27"'-3, 27"'-4, 27"'-5, 27"'-6 aus den unterschiedlichen Gruppen A,B angeordnet. Der Signalbeitrag jeder Gruppe zu dem innenliegenden Analysatorelement 26 ist aufgrund der gewählten Symmetrie konstant, sodass die Amplitude des Signals des Analysatorelementes 26 nicht durch das Übersprechen beeinflusst wird. Auch bei dieser Anordnung werden vorteilhafterweise lediglich die vom Rand des Empfängers 20'" beabstandeten Analysatorelemente 25'" ausgewertet, während die außenliegenden Empfangselemente 25"' zwar zum Übersprechen beitragen, in ihnen jedoch das Übersprechen nicht optimal kompensiert wird und sie daher zur Auswertung vorzugsweise nicht berücksichtigt werden. Die Punkte am Rand der Anordnung deuten wiederum an, dass die Anordnung in beliebiger Richtung mit beliebig vielen weiteren Analysatorelementen 25'" fortgesetzt werden kann.

### Bezugszeichenliste

- 10: Lichtquelle
- 12: Polarisator
- 14: Welle / Rotierendes Objekt
- 16: Reflektor
- 20, 20', 20", 20"': Empfänger
- 22: Polarisationsfilterstruktur
- 21, 21', 21", 21'": Zeile
- 25, 25', 25", 25'": Analysatorelement
- 26: Innenliegendes Analysatorelement
- 27: Außenliegendes Analysatorelement
- 27"'-1: Analysatorelement
- 27"'-2: Analysatorelement
- 27"'-3: Analysatorelement
- 27"'-4: Analysatorelement
- 27"'-5: Analysatorelement
- 27"'-6: Analysatorelement
- A, B, C, D, E, F, G, H: Gruppen von Analysatorelementen
- I: Länge
- b: Breite
- Z: Zentrum

## Patentansprüche

1. Vorrichtung zur Messung des Drehwinkels zweier relativ zueinander rotierender Objekte, mit einem einem ersten Objekt zugeordneten Sender (10), mit einem einem zweiten Objekt (14) zugeordneten, die Polarisationseigenschaft eines Sendelichts beeinflussenden Polarisator (12), wobei sich der Sender (10) und der Polarisator (12) in Abhängigkeit vom Drehwinkel relativ zueinander drehen, und mit einem dem ersten Objekt zugeordneten Empfänger (20', 20", 20"'), der die durch den Polarisator (12) modulierte Polarisationseigenschaft des Sendelichts analysiert, um ein drehwinkelabhängiges Signal zu erzeugen,
wobei der Empfänger (20', 20", 20'") zumindest ein zweidimensionales, aus Zeilen (21', 21", 21'") bestehendes Array aufweist, auf dem Empfangselemente mit jeweils vorgeordneten Polarisationsfilterelementen einer Polarisationsfilterstruktur (22) angeordnet sind, so dass die Empfangselemente mit jeweils vorgeordneten Polarisationsfilterelementen der Polarisationsfilterstruktur jeweilige Analysatorelemente (25', 25", 25'", 26) bilden, wobei die Analysatorelemente (25', 25", 25"', 26) mit jeweils gegeneinander verdrehten Polarisationsebenen derart angeordnet sind, dass mindestens zwei Gruppen (A, B, C, D, E, F, G, H) von Analysatorelementen (25', 25", 25"', 26) mit jeweils definiertem Winkelversatz der Polarisationsebenen sich ergeben, wobei die Gruppen (A, B, C, D, E, F, G, H) in definierter Anordnung zu einander in den Zeilen (21', 21", 21'") des Arrays derart vorgesehen sind, dass Analysatorelemente (25', 25", 25"', 26) mit gleichen Polarisationsebenen durch zumindest ein Analysatorelement (25', 25", 25'", 26) mit einer anderen Polarisationsebene voneinander beabstandet sind, **dadurch gekennzeichnet, dass** das Array des Empfängers (20', 20", 20"') wenigstens zwei Zeilen (21', 21", 21''') mit jeweils mehreren Analysatorelementen (25', 25", 25"', 26) aufweist, wobei angrenzende Zeilen (21', 21", 21"') jeweils um eine halbe Länge (I) eines Abstandes zwischen den Zentren (Z) zweier benachbarten Analysatorelementen (25', 25", 25"', 26) gegeneinander in Längsrichtung der Zeile (21', 21", 21'") versetzt angeordnet sind.

2. Vorrichtung nach Anspruch 1, **dadurch gekennzeichnet, dass** die Gruppen von Analysatorelementen (25', 25") jeweils aus einem Paar von Analysatorelementen (25', 25") bestehen, wobei die Analysatorelemente (25', 25") eines Paares einer jeweiligen Gruppe einen Winkelversatz der Polarisationsebenen von 90° zueinander aufweisen.

3. Vorrichtung nach Anspruch 1 oder 2, **dadurch gekennzeichnet, dass** die Gruppen von Analysatorelementen (25', 25") aus Paarungen von 0° und 90°, 22,5° und 112,5°, 45° und 135°, und 67,5° und 157,5° oder 0° und 90°, 11,25° und 101,25°, 22,5° und 112,5°, 33,75° und 123,75°, 67,5° und 157,5°, und 78,75° und 168,75° bestehen.

4. Vorrichtung nach Anspruch 3, **dadurch gekennzeichnet, dass** in jeder Zeile (21', 21") des Arrays nur eine Gruppe von Analysatorelementen (25', 25") aus gleicher Paarung angeordnet ist.

5. Vorrichtung nach Anspruch 1, **dadurch gekennzeichnet, dass** in jeder Zeile (21', 21") nur eine Gruppe von Analysatorelementen (25', 25") angeordnet ist, deren Polarisationsebenen um 90° gegeneinander verdreht sind, wobei benachbarte Analysatorelemente (25', 25") unterschiedliche Polarisationsebenen aufweisen.

6. Vorrichtung nach Anspruch 5, **dadurch gekennzeichnet, dass** die Gruppen von Analysatorelementen (25', 25") in wenigstens zwei, vorzugsweise vier oder acht, angrenzenden Zeilen (21', 21") voneinander verschieden sind.

7. Vorrichtung nach Anspruch 1, **dadurch gekennzeichnet, dass** das Array des Empfängers (20"') wenigstens drei Zeilen (21"') aufweist, wobei wenigstens ein Analysatorelement (26) sechs benachbarte Analysatorelemente (25"') aufweist, wobei die sechs benachbarten Analysatorelemente (25"') in zwei Gruppen mit jeweils drei Analysatorelementen (27"'-1, 27"'-3, 27"'-5; 27"'-2, 27"'-4, 27"'-6) zuordenbar sind, wobei umlaufend um das eine Analysatorelement (26"') jeweils abwechselnd Analysatorelemente (27"'-1, 27"'-3, 27"'-5; 27"'-2, 27"'-4, 27"'-6) der unterschiedlichen Gruppen angeordnet sind, und wobei jede der Dreiergruppen von Analysatorelementen (27"'-1, 27"'-3, 27"'-5; 27"'-2, 27"'-4, 27"'-6) jeweils zwei Winkelversätze von 60° (27"'-1, 27"'-5 / 27"'-3, 27"'-5; 27"'-2, 27"'-4 /27"'-4, 27"'-6) und einen Winkelversatz von 120° (27"'-1, 27"'-3; 27"'-2, 27"'-6) aufweist.

8. Vorrichtung nach Anspruch 7, **dadurch gekennzeichnet, dass** die sechs benachbarten Analysatorelemente (27"'-1, 27"'-3, 27"'-5; 27"'-2, 27"'-4, 27"'-6) sechs verschiedene Polarisationsebenen aufweisen.

9. Vorrichtung nach einem der vorhergehenden Ansprüche, **dadurch gekennzeichnet, dass** die Analysatorelemente (25', 25", 25"') rechteckig, vorzugsweise mit einer Länge (I), welche doppelt so groß ist wie eine Breite (b), oder sechseckig ausgebildet sind.

10. Vorrichtung nach einem der vorhergehenden Ansprüche, **dadurch gekennzeichnet, dass** das Array des Empfängers (20', 20", 20"') als integrierter Sensor ausgebildet ist, bei welchem insbesondere ein optoelektronischer Sensor und die Polarisationsfilterstruktur (22) gemeinsam auf einem Halbleitersubstrat angeordnet sind.

## Claims

1. An apparatus for measuring the angle of rotation of two objects rotating relative to one another, having a transmitter (10) associated with a first object; having a polarizer (12) associated with a second object (14) and influencing the polarization property of a transmitted light, with the transmitter (10) and the polarizer (12) rotating relative to one another in dependence on the angle of rotation; and having a receiver (20', 20", 20"') which is associated with the first object and which analyzes the polarization property of the transmitted light modulated by the polarizer (12) to generate a signal dependent on the angle of rotation,
wherein the receiver (20', 20", 20'") has at least one two-dimensional array which comprises rows (21, 21", 21'") and on which reception elements having respective polarization filter elements of a polarization filter structure (22) arranged before them are arranged such that the reception elements having respective polarization filter elements of the polarization filter structure arranged before them form respective analyzer elements (25', 25", 25"', 26), with the respective analyzer elements (25', 25", 25"', 26) being arranged with polarization planes respectively rotated with respect to one another such that at least two groups (A, B, C, D, E, F, G, H) of analyzer elements (25', 25", 25"', 26) result with a respective defined angular offset of the polarization planes, and with the groups (A, B, C, D, E, F, G, H) being provided in a defined arrangement with respect to one another in the rows (21', 21", 21"') of the array such that analyzer elements (25', 25", 25"', 26) having the same polarization planes are spaced apart from one another by at least one analyzer element (25', 25", 25"', 26) having a different polarization plane, **characterized in that** the array of the receiver (20', 20", 20"') has at least two rows (21', 21 ", 21"') having a respective plurality of analyzer elements (25', 25", 25"', 26), with adjacent rows (21', 21", 21"') each being arranged offset from one another in the longitudinal direction of the row (21, 21", 21'") by half a length (I) of a spacing between the centers (Z) of two neighboring analyzer elements (25', 25", 25"', 26).

2. An apparatus in accordance with claim 1, **characterized in that** the groups of analyzer elements (25', 25") each comprise a pair of analyzer elements (25', 25"), with the analyzer elements (25', 25") of a pair of a respective group having an angular offset of the polarization planes of 90° with respect to one another.

3. An apparatus in accordance with claim 1 or claim 2, **characterized in that** the groups of analyzer elements (25', 25") comprise pairings of 0° and 90°, 22.5° and 112.5°, 45° and 135°, and 67.5° and 157.5° or 0° and 90°, 11.25° and 101.25°, 22.5° and 112.5°, 33.75° and 123.75°, 67.5° and 157.5°, and 78.75° and 168.75.

4. An apparatus in accordance with claim 3, **characterized in that** only one group of analyzer elements (25', 25") from a same pairing is arranged in each row (21', 21 ") of the array.

5. An apparatus in accordance with claim 1, **characterized in that** only one group of analyzer elements (25', 25") whose polarization planes are rotated by 90° with respect to one another is arranged in each row (21', 21 "), with neighboring analyzer elements (25', 25") having different polarization planes.

6. An apparatus in accordance with claim 5, **characterized in that** the groups of analyzer elements (25', 25") differ from one another in at least two, preferably four or eight, adjacent rows (21', 21").

7. An apparatus in accordance with claim 1, **characterized in that** the array of the receiver (20"') has at least three rows (21"'), with at least one analyzer element (26) having six neighboring analyzer elements (25"'), with the six neighboring analyzer elements (25"') being able to be associated with three respective analyzer elements (27"'-1, 27"'-3, 27"'-5; 27"'-2, 27"'-4, 27"'-6), and with analyzer elements (27"'-1, 27"'-3, 27"'-5; 27"'-2, 27"'-4, 27"'-6) of the different groups being arranged respectively alternating peripherally around the one analyzer element (26"'), and with each of the groups of three analyzer elements (27"'-1, 27"'-3, 27"'-5; 27"'-2, 27"'-4, 27"'-6) each having two angular offsets of 60° (27"'-1, 27"'-5 / 27"'-3, 27"'-5; 27"'-2, 27"'-4 /27"'-4, 27"'-6) and one angular offset of 120° (27"'-1, 27"'-3; 27"'-2, 27"'-6).

8. An apparatus in accordance with claim 7, **characterized in that** the six neighboring analyzer elements (27"'-1, 27"'-3, 27"'-5; 27"'-2, 27"'-4, 27"'-6) have six different polarization planes.

9. An apparatus in accordance with any one of the preceding claims, **characterized in that** the analyzer elements (25', 25', 25"') are rectangular, preferably with a length (I) that is twice as much as a width (b), or are hexagonal.

10. An apparatus in accordance with any one of the preceding claims, **characterized in that** the array of the receiver (20', 20", 20")) is configured as an integrated sensor in which an optoelectronic sensor and the polarization filter structure (22) are in particular arranged together on a semiconductor substrate.

## Revendications

1. Dispositif de mesure de l'angle de rotation de deux objets tournant l'un par rapport à l'autre, comportant un émetteur (10) associé à un premier objet, un polariseur (12) associé à un second objet (14) et influant sur la propriété de polarisation d'une lumière émise, dans lequel l'émetteur (10) et le polariseur (12) tournent l'un par rapport à l'autre en fonction de l'angle de rotation, et comportant un récepteur (20', 20", 20"') associé au premier objet, qui analyse la propriété de polarisation, modulée par le polariseur (12), de la lumière émise afin de générer un signal dépendant de l'angle de rotation, dans lequel le récepteur (20', 20", 20"') comprend au moins un réseau bi-dimensionnel constitué par des lignes (21', 21", 21 "') sur lequel sont agencés des éléments de réception ayant des éléments de filtrage polarisant d'une structure de filtrage polarisant (22) agencés en amont, de sorte que les éléments de réception ayant des éléments de filtrage polarisant respectifs de la structure de filtrage polarisant agencés en amont forment des éléments analyseurs respectifs (25', 25", 25"', 26), les éléments analyseurs respectifs (25', 25", 25"', 26) ayant des plans de polarisation tournés les uns par rapport aux autres sont agencés de telle sorte qu'il résulte au moins deux groupes (A, B, C, D, E, F, G, H) d'éléments analyseurs (25', 25", 25"', 26) avec un décalage angulaire défini respectif des plans de polarisation, les groupes (A, B, C, D, E, F, G, H) sont prévus en une disposition définie les uns par rapport aux autres dans les lignes (21', 21 ", 21'") du réseau de telle sorte que des éléments analyseurs (25', 25", 25"', 26) ayant les mêmes plans de polarisation sont espacés les uns des autres par au moins un élément analyseur (25', 25", 25"', 26) ayant un autre plan de polarisation, **caractérisé en ce que** le réseau du récepteur (20', 20", 20"') comprend au moins deux lignes (21', 21", 21"') avec plusieurs éléments analyseurs respectifs (25', 25", 25"', 26), des lignes adjacentes (21', 21 ", 21'") étant agencées en décalage les unes des autres de la moitié de la longueur (I) d'une distance entre les centres (Z) de deux éléments analyseurs voisins (25', 25", 25"', 26) en direction longitudinale de la ligne (21', 21 ", 21"').

2. Dispositif selon la revendication 1, **caractérisé en ce que** les groupes d'éléments analyseurs (25', 25") sont constitués chacun par une paire d'éléments analyseurs (25', 25"), les éléments analyseurs (25', 25") d'une paire d'un groupe respectif présentant un décalage angulaire des plans de polarisation de 90° l'un par rapport à l'autre.

3. Dispositif selon la revendication 1 ou 2, **caractérisé en ce que** les groupes d'éléments analyseurs (25', 25") sont constitués par des appariements de 0° et de 90°, de 22,5° et de 112,5°, de 45° et de 135°, de 67,5° et de 157,5°, ou de 0° et de 90°, de 11,25° et de 101,25°, de 22,5° et de 112,5°, de 33,75° et de 123,75°, de 67,5° et de 157,5°, de 78,75° et de 168,75°.

4. Dispositif selon la revendication 3, **caractérisé en ce que** dans chaque ligne (21', 21 ") du réseau est agencé un seul groupe d'éléments analyseurs (25', 25") d'un même appariement.

5. Dispositif selon la revendication 1, **caractérisé en ce que** dans chaque ligne (21', 21 ") est agencé un seul groupe d'éléments analyseurs (25', 25") dont les plans de polarisation sont tournés de 90° l'un par rapport à l'autre, des éléments analyseurs (25', 25") voisins présentant différents plans de polarisation.

6. Dispositif selon la revendication 5, **caractérisé en ce que** les groupes d'éléments analyseurs (25', 25") dans au moins deux, de préférence quatre ou huit lignes adjacentes (21', 21 ") sont différents les uns des autres.

7. Dispositif selon la revendication 1, **caractérisé en ce que** le réseau du récepteur (20"') comprend au moins trois lignes (21"'), au moins un élément analyseur (26) comprenant six éléments analyseurs (25"') voisins, les six éléments analyseurs (25"') voisins pouvant être associés en deux groupes ayant chacun trois éléments analyseurs (27"'-1, 27"'-3, 27"'-5 ; 27"'-2, 27"'-4, 27"'-6), et en périphérie autour dudit un élément analyseur (26"') sont agencés respectivement en alternance des éléments analyseurs (27"'-1, 27"'-3, 27"'-5 ; 27"'-2, 27"'-4, 27"'-6) des différents groupes, chacun des groupes de trois éléments analyseurs (27"'-1, 27"'-3, 27"'-5 ; 27"'-2, 27"'-4, 27"'-6) présentant deux décalages angulaires respectifs de 60° (27"'-1, 27"'-5 / 27"'-3, 27"'-5 ; 27"'-2, 27"'-4 / 27"'-4, 27"'-6) et un décalage angulaires de 120° (27"'-1, 27"'-3 ; 27"'-2, 27"'-6).

8. Dispositif selon la revendication 7, **caractérisé en ce que** les six éléments analyseurs (27"'-1, 27"'-3, 27"'-5 ; 27"'-2, 27"'-4, 27"'-6) voisins présentent six plans de polarisation différents.

9. Dispositif selon l'une des revendications précédentes, **caractérisé en ce que** les éléments analyseurs (25', 25", 25"') sont réalisés en forme rectangulaire, de préférence avec une longueur (I) qui fait le double d'une largeur (b), ou en forme hexagonale.

10. Dispositif selon l'une des revendications précédentes, **caractérisé en ce que** le réseau du récepteur (20', 20", 20"') est réalisé sous forme de capteur intégré dans lequel en particulier un capteur optoélectronique et la structure de filtrage polarisant (22) sont agencés conjointement sur un substrat semiconducteur.
